# EUROPEAN PATENT APPLICATION

(11) **EP 1 226 792 A2**
(43) Date of publication of application: **31.07.2002**
(21) Application number: 02001582.2
(22) Date of filing: 23.01.2002
(51) Int. Cl.: A61C 13/00, A61C 9/00

(54) **Apparatus and method to make dental protheses**

(30) Priority: 25.01.2001 IT UD010015
(71) Applicant: Cuiuli Vicenzo, 33030 Majano (UD) (IT)
(72) Inventor: Cuiuli Vicenzo, 33030 Majano (UD) (IT)
(74) Representative: Petraz, Gilberto Luigi

(57) **Abstract**

Apparatus (10) and method to make dental prostheses comprising a base element (13) wherein a plaster cast of the denture is able to be mounted on which the prosthesis is able to be mounted; in said apparatus (10) guide means (11) are provided to couple, selectively and alternately, with the base element (13), a positioning element (10a), able to position at least a reference element (26) in the plaster cast, a support element (10b), able to be positioned counter to the base element (13) to achieve at least a mask bearing the negative impression of the prosthesis, or a shell element (10c) for the polymerization of the resins which form the outer part of the prosthesis.

## Description

### FIELD OF THE INVENTION

The invention concerns a dental apparatus to make dental prostheses, and the relative method.

The apparatus according to the invention comprises a base with which a plurality of elements can be alternately coupled, so as to form a relative plurality of different instruments needed to perform, directly on the original model, the different steps to work and make dental prostheses, with maximum precision and in the shortest possible time.

### BACKGROUND OF THE INVENTION

It is well-known that making a dental prosthesis requires maximum finishing and accuracy, respecting the anatomy of the natural model in order to avoid serious problems in chewing, balance and possible effects on the facial nerves and muscles.

It is also well-known that to make dental prostheses, different instruments are needed to perform the individual steps into which the working methods are divided.

The first of such steps, known as pinning, provides to position the dental impression, taken from the patient, on a specific instrument consisting of a half-shell having a substantially U-shaped groove, similar to that of the denture. A plaster cast is made into the impression, so as to obtain a cast of the denture, or part of it, on which the prosthesis is to be made. In the plaster cast some parallel pins are also partly inserted, so that the cast can be subsequently positioned in a second instrument known as an articulator, on which a wax model of the tooth to be reconstructed is made.

The second step is then begun, wherein the plaster cast is positioned on the base of a third instrument known as a verticulator by means of which a negative of the wax model, called mask, is made.

Then, a corresponding metal structure is made, by any conventional method.

A third step provides to position the plaster cast and the metal structure, counter positioned to the relative mask, in a fourth instrument known as a protection element or muffle. In the cavity formed between the metal structure and the mask opposite, photo-polymerizing or self-setting resins are injected, which as they set constitute the outer surface of the definitive dental prosthesis.

The use of these conventional instruments as described heretofore does not guarantee that the final product will be perfect in quality and aesthetics. In fact, the pins are not always inserted precisely into the plaster cast, with consequent repercussions on the subsequent steps of modelling the prosthesis. The plaster cast is moved from one instrument to the other with possible mistakes in positioning and taking the shape of the masks, and also in the making of the definitive prosthesis.

The present Applicant has designed and embodied this invention to overcome these shortcomings of the state of the art, and to obtain further advantages.

### SUMMARY OF THE INVENTION

The invention is set forth and characterized in the main claims, while the dependent claims describe other innovative characteristics of the invention.

The main purpose of the invention is to achieve an apparatus and a method which will permit to make dental prostheses simply, quickly and precisely. To be more exact, the method and apparatus according to the invention allow to perform on the original cast all the work necessary to make the prosthesis, such as constructing the provisional models, modelling the structure, transforming the provisional models with photo-polymerizable resin, molding the ceramic, and also to perform all the steps with maximum accuracy, and to intervene on possible corrections, without needing to have to start again from a new model.

In accordance with this purpose, the apparatus according to the invention substantially comprises a base element, provided with one or more guide rods orthogonal thereto, and a plurality of covering elements able to be used alternately in association with the base element in order to perform the different steps of making a dental prosthesis.

The base element substantially comprises a plane structure from which one or more guide rods arise, able to permit the movement, substantially parallel to the base, of these covering elements, substantially U-shaped grooved means able to contain a plaster cast of the impression of the denture, attachment holes able to attach the impression or cast to the grooved means, for example by means of screws.

The first of the three covering elements, known as positioner or pinner, consists of a first shaped structure with first through holes, able to couple with the guide rods of the base element, first eyelet means, substantially equal in form to the grooved means, and including, inside, a guide inside which sliding elements are able to slide. The sliding elements comprise at least a through hole inside which at least a pin is able to be inserted, arranged substantially orthogonal to said base element and able to be at least partly inserted into the plaster cast.

The second covering element, known as support or verticulator, is substantially formed by a second shaped structure provided with second through holes able to mate with the guide rods, adjustment means consisting of threaded means, or threaded bushing, mounted on the support element, and a spacer rod able to be attached to the bushing, so as to adjust the height of the verticulator in relation to the base, and at least a reference block in proximity with which material is positioned in order to make masks bearing the negative impression of the dental prosthesis.

Finally, the third covering element, known as shell or muffle element, is formed by a third shaped structure including third through holes able to mate with the guide rods, second eyelet means, substantially identical to the grooved means of the base, at least two parallel pins arranged substantially orthogonal to the upper surface of the third shaped structure. Moreover, a cover is provided comprising at least two seatings able to mate with the pins and at least a through hole the function of which will be explained hereafter; said cover is able to surmount the third structure. Clamping means are also provided, substantially consisting of an at least partly threaded rod, able to attach the muffle element to the base element.

The use of the apparatus as described heretofore is managed by the following method.

The method to use the apparatus according to the invention substantially comprises three steps: a first step concerns the creation of a plaster cast of the denture and a subsequent insertion of reference pins into said plaster cast; a second step concerns the making of a semi-final model, and a third step concerns the making of the definitive model.

The first step, which we shall call pinning, comprises the positioning on the base of the impression of the denture on which the prosthesis will be made; the making of the cast of the impression by means of a plaster cast and, after the pinner element has been mounted with the base by coupling the rods and first through holes, the orientation of the sliding elements so as to partly insert the reference pins into the portion of the denture concerned.

After a wax model has been made by means of a normal articulator, the plaster cast is attached to the base element with the relative wax model, and then the verticulator element is mounted on the base element; silicon is arranged to achieve the mask in proximity with the reference blocks and, by acting on the clamping bushing, the height of the verticulator element from the base element is adjusted, so that the wax model cuts into the material for the mask, leaving a precise impression of the intermediate plastic mold.

It is possible, with the mask, to control all the steps of excavating and shaping the mold. Subsequently, there follows the step to transform the intermediate plastic mold into the intermediate metal mold by means of fusion, after which the semi-final model is made.

The metal structure is inserted onto the plaster model previously attached to the base element. The mask is positioned by means of the reference blocks to the verticulator, the mask is filled with self-polymerizing resin, the cover is inserted on the base through the guides, everything is coupled together and one waits for polymerization to occur, so as to achieve the semi-final model.

After the semi-final model has been tried in the patient's mouth, the third step of the method is begun, which provides to make the definitive model.

The semi-final model is put onto the plaster cast attached to the base element, after which the muffle cover is inserted through the guides and made to descend until it comes into contact with the plaster cast.

A kind of silicone dam is created to delimit the perimeter of the provisional bridge so as to create a box able to contain the transparent silicone. The muffle cover is opened and the transparent silicone is poured into the box which contains the semi-final model. Once the silicone has set, the muffle is removed from the cast and the definitive prosthesis is made with photo-polymerizable resin which is injected into the transparent mask.

### BRIEF DESCRIPTION OF THE DRAWINGS

These and other characteristics of the invention will be clear from the following description of a preferential form of embodiment, given as a non-restrictive example with reference to the attached drawings wherein:
- Fig. 1: is a prospective view of a base element of the apparatus according to the invention;
- Fig. 2a: is a first prospective view of the first cover of the base element of Fig. 1;
- Fig. 2b: is a second prospective view of the first cover of the base element of Fig. 1;
- Fig. 3a: is a first prospective view of the second cover of the base element of Fig. 1 and one of its spacer rods;
- Fig. 3b: is a second prospective view of the second cover of the base element of Fig. 1;
- Fig. 4: is an exploded view of the third cover of the element of Fig. 1;

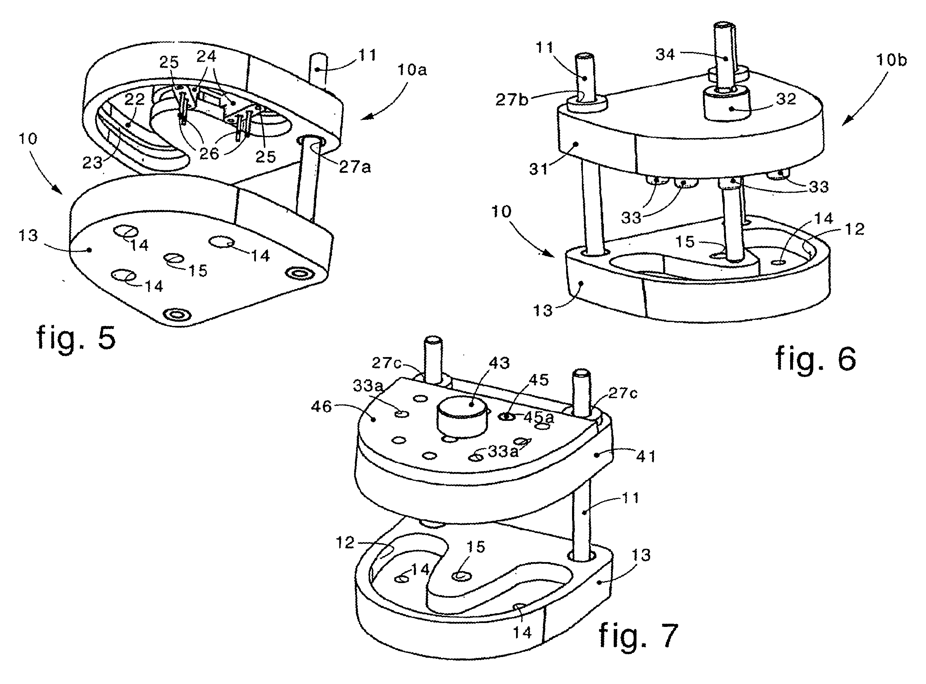

- Fig. 5: is a prospective view of the first assembly of the apparatus according to the method of the invention;
- Fig. 6: is a prospective view of the second assembly of the apparatus according to the method of the invention;
- Fig. 7: is a prospective view of the third assembly of the apparatus according to the method of the invention.

### DETAILED DESCRIPTION OF A PREFERENTIAL EMBODIMENT

With reference to the attached Figures, an apparatus 10 according to the invention comprises a base structure 13, advantageously made of plastic material, for example polyethylene, on which a groove 12 is made, substantially identical to the profile of a denture and able to accommodate the plaster cast of a silicone impression, made by the dentist. On the bottom of the groove 12 two holes 14 are made through which clamping screws, not shown in the drawings, are able to clamp the plaster cast.

The base 13 comprises a threaded hole 15 and, orthogonally thereto, a pair of guide rods 11 with a circular section, parallel to each other and advantageously made of metal, to which three covering elements are alternately mated.

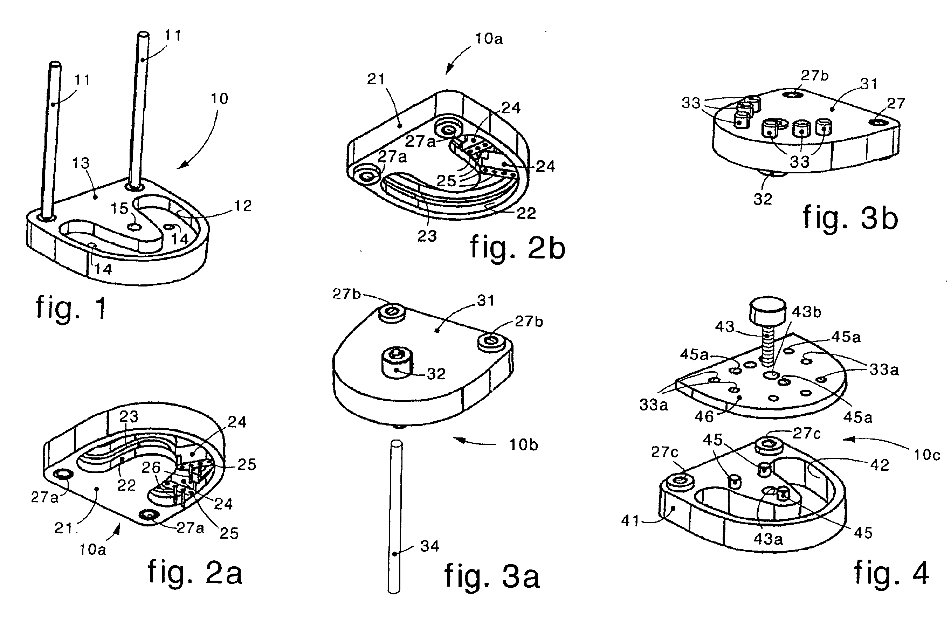

Said covering elements have different functions: in fact a first element or pinner 10a (Fig. 2) is formed by a shaped structure 21, having the form of the base 13. Said shaped structure 21 has a pair of holes containing bushings 27a able to mate with the guide rods 11 and an eyelet 22, with a profile substantially identical to that of the groove 12 of the base 13. Along its inner profile the eyelet 22 comprises a guide 23 able to accommodate two or more sliding elements 24 and allow them to slide; the sliding elements 24 support, inside parallel holes 25, some pins 26 which will then be inserted into a plaster cast, orthogonally to the base 13.

The second element or verticulator 10b (Fig. 3) is formed by a shaped structure 31 substantially equal in shape to that of the base 13. The shaped structure 31 has a pair of holes containing bushings 27b able to mate with the guide rods 11 of the base 13, a clamping bushing 32 and reference blocks 33, to which material will be attached to make impressions or masks, such as for example silicone, with which, with maximum precision, a mask of the wax model of the prosthesis is made. The verticulator 10b also comprises a spacer rod 34, able to be clamped to the clamping bushing 32, so as to adjust the distance between the base 13 and the verticulator 10b itself.

Finally, a third element or muffle 10c (Fig. 4) consists of a shaped structure 41 comprising an eyelet 42, able to accommodate the negatives of the prosthesis, two holes containing bushings 27c, able to mate with the guide rods 11, a central hole 43a, three pins 45 facing upwards and arranged at 120° around the central hole 43a.

A cover 46, with the same shape as the shaped structure 41, has a hole 43b, three holes 45a arranged at 120° around the hole 43b and a plurality of seatings 33a, as an outlet for the silicone.

The clamping of the cover 46 to the shaped structure 41 is achieved by a screw element 43 able to pass with play through the holes 43b and 43a and to couple with the threaded hole 15 present on the base 13.

The apparatus as described heretofore is used according to the following method, divided into three steps, that is, pinning, verticulation and setting by means of the muffle 10c.

The pinning step provides to position the silicone impression made by the dentist and attach it onto the base 13, to make a plaster cast inside the silicone and to mount the pinner 10a by coupling the bushings 27a to the rods 11.

After selecting the zone of the denture where the prosthesis is to be made, the sliding elements 24 are positioned so as to partly insert the pins 26 into the plaster cast in correspondence with the portion concerned. Once the plaster cast has dried, the pinner 10a is detached from the base 13, leaving the pins 26 in the cast, and a solid base is made. Subsequently, by means of a normal articulator, a wax model of the prosthesis is made, exploiting the plaster cast already made and pinned with the apparatus according to the invention.

In the verticulation step, the plaster cast is attached to the base 13, and subsequently the verticulator 10b is mounted by coupling its bushings 27b to the rods 11. By positioning silicone next to the reference blocks 33, in correspondence with the portion of the denture wherein the prosthesis is made, a mask is achieved bearing a negative impression of the wax model. Once the mask has been made the silicone is removed from the verticulator 10b.

After a metal structure has been made to support the prosthesis, the semi-final model is made by inserting the metal structure onto the plaster model attached to the base 13. Then the mask is positioned on the verticulator 10b by means of the reference blocks 33, and subsequently it is filled with a self-polymerizing resin. The verticulator 10b is lowered until the resin comes into contact with the metal structure. By means of the clamping bushing 32, the spacer rod 34 is attached to the verticulator 10b to keep it at a certain height from the base 13 and we wait for the polymerization of the resin. At the end of these operations, the verticulator 10b is dis-associated from the base 13 and the semi-final model thus achieved is removed.

After the trials carried out with the semi-final model on the patient, the definitive model is made.

In order to do this, the semi-final model is inserted onto the plaster cast attached to the base 13, and the muffle 10c is mounted on the base 13, by means of coupling the bushings 27c and the rods 11, until the muffle 10c itself comes into contact with the plaster cast.

A silicone dam is made around the model or provisional bridge so as to create a container or box into which transparent silicone is cast. We wait until the latter has set so as to form a transparent mask bearing the impression of the semi-final model. Subsequently the muffle 10c is detached from the base 13 and the self-polymerizing resin, which formed part of the semi-final model, is dis-associated from the metal structure. The latter is re-positioned on the plaster cast located on the base 13, while the transparent mask is positioned on the muffle 10c and its cavities filled with photo-polymerizable resin. Subsequently the base 13 and the muffle 10c are coupled so as to take the photo-polymerizable resin into contact with the metal structure.

This coupling leads to the making of the definitive prosthesis, since the photo-polymerizable resin inserted into the transparent mask sets, and takes on the precise form of the latter.

It is clear however that modifications and/or additions of parts can be made to the apparatus 10 and the method as described heretofore, without departing from the spirit and scope of the invention.

For example, according to a variant, on the base 13 there is a single vertical rod with a polygonal section.

It is also clear that, although the invention has been described with reference to specific examples, a skilled person shall certainly be able to achieve many other equivalent forms of apparatus and method to make dental prostheses, all of which shall come within the field and scope of this invention.

## Claims

1. Apparatus to make dental prostheses comprising a base element (13) wherein a plaster cast of the denture is able to be mounted on which said prosthesis is able to be mounted, **characterized in that** guide means (11) are provided to couple, selectively and alternately, with said base element (13), a positioning element (10a), able to position at least a reference element (26) in said plaster cast, a support element (10b), able to be positioned counter to said base element (13) to achieve at least a mask bearing the negative impression of said prosthesis, or a shell element (10c) for the polymerization of the resins which form the outer part of said prosthesis.

2. Apparatus as in claim 1, **characterized in that** said guide means comprise at least a guide rod (11) arranged orthogonally with respect to said base element (13).

3. Apparatus as in claim 2, **characterized in that** said guide means comprise at least a pair of guide rods (11) having a substantially circular cross section.

4. Apparatus as in claim 2, **characterized in that** said guide rod (11) has a polygonal cross section.

5. Apparatus as in claim 1, **characterized in that** said base element (13) comprises first grooved means (12) having a substantially U-shape and able to contain said plaster cast.

6. Apparatus as in claim 1, **characterized in that** said base element (13) comprises attachment means able to attach said plaster cast to said base element (13).

7. Apparatus as in claim 6, **characterized in that** said attachment means comprise a plurality of holes (14) inside which respective screws are able to be accommodated.

8. Apparatus as in claim 2, **characterized in that** said positioning element (10a) comprises a first shaped structure (21) provided with first through holes (27a) able to mate with said guide rod (11) to permit said positioning element (10a) to move substantially parallel to said base element (13).

9. Apparatus as in claims 2 and 5, **characterized in that** said positioning element (10a) comprises first eyelet means (22), with a profile corresponding to that of said grooved means (12).

10. Apparatus as in claim 9, **characterized in that** a plurality of sliding elements (24) are each able to slide inside corresponding guides (23) made in said first eyelet means (22).

11. Apparatus as in claim 9, **characterized in that** said sliding elements (24) comprise at least a through hole (25) inside which a corresponding reference pin (26) is able to be inserted orthogonal to said base element (13).

12. Apparatus as in claim 2, **characterized in that** said support element (10b) comprises a second shaped structure (31) provided with second through holes (27b) able to mate with said guide rod (11) to permit said support element (10b) to move substantially parallel to said base element (13).

13. Apparatus as in claim 12, **characterized in that** adjustment means are provided to adjust the distance between said support element (10b) and said base element (13), said adjustment means comprising at least a clamping bushing (32) mounted on said support element (10b) and a spacer rod (34) able to be inserted into said at least one clamping bushing (32) and to be selectively clamped by the latter.

14. Apparatus as in claim 12, **characterized in that** said support element (10b) comprises at least a reference block (33) able to support said mask.

15. Apparatus as in claim 2, **characterized in that** said shell element (10c) comprises a third shaped structure (41) provided with third through holes (27c) able to mate with said guide rod (11) to permit said shell element (10c) to move substantially parallel to said base element (13).

16. Apparatus as in claim 15, **characterized in that** said shell element (10c) comprises second eyelet means (42) with a profile corresponding to that of said grooved means (12).

17. Apparatus as in claim 15, **characterized in that** said shell element (10c) comprises at least a substantially central through hole (43a) and at least two pins (45), parallel to each other and arranged orthogonally to the upper surface of said third shaped structure (41).

18. Apparatus as in claim 15, **characterized in that** said shell element (10c) comprises a cover (46) able to surmount said third shaped structure (41) and clamping means (43) able to clamp said shell element (10c) to said base element (13).

19. Apparatus as in claim 18, **characterized in that** said cover (46) comprises a substantially central hole (43b), at least two seatings (45a) able to mate with said pins (45), and at least a hole (33a) able to permit the excess silicone to emerge.

20. Apparatus as in claim 18, **characterized in that** said clamping means comprise an at least partly threaded rod (43) able to be associated with said base element (13).

21. Apparatus as in claim 1, **characterized in that** said base element (13), said positioning element (10a), said support element (10b) and said shell element (10c) are made of plastic material.

22. Method to make dental prostheses comprising a first step wherein a plaster cast is made inside the impression of the denture on which the prosthesis is to be made, and a subsequent insertion of reference pins into said plaster cast, a second step wherein at least one mask is made bearing the impression of said prosthesis, and a third step wherein resins are injected inside said mask, and subsequently set, **characterized in that** said three steps are performed by means of a base element (13) with which are alternately associated a positioning element (10a), able to insert said reference pins in said plaster cast, a support element (10b) able to support the material to make said mask, and a shell element (10c) able to contain said plaster cast and said mask.

23. Method as in claim 22, **characterized in that** said first step comprises the insertion and attachment of said impression in said base element (13); the making of said plaster cast; the coupling of said base element (13) with said positioning element (10a); and the positioning of sliding elements (24) in correspondence with the zone of said plaster cast wherein said prosthesis will be applied, for the partial insertion of said reference pins (26) into said plaster cast.

24. Method as in claim 23, **characterized in that** between said first and said second step it provides to make a wax model by means of an articulator, and **in that** said second step comprises the coupling of said support element (10b) with said base element (13); the positioning at least of the material to make a mask by means of reference blocks (33); and the making of said mask bearing the negative cast of said wax model.

25. Method as in claim 24, **characterized in that** between said second and said third step it provides to make a metal structure and a relative semi-final model, and **in that** said third step comprises the positioning of said semi-final model in said base element (13); the mounting of said shell element (10c) on said base element (13); the making of a transparent mask bearing the negative impression of said semi-final model; the dis-assembly of said semi-final element from said plaster cast; the positioning of said metal structure in said plaster cast; the positioning on said shell element (10c) of said transparent mask; the filling of said transparent mask with photo-polymerizable resin; the positioning of said cover (46) above said shell element (10c); and the coupling of said base element (13) with said shell element (10c).
